# EUROPÄISCHE PATENTSCHRIFT

(11) **EP 0 641 988 B1**
(45) Veröffentlichungstag und Bekanntmachung des Hinweises auf die Patenterteilung: **28.05.1997**
(21) Anmeldenummer: 94110858.1
(22) Anmeldetag: 13.07.1994
(51) Int. Cl.: F41H 5/04

(54) **Verbundwerkstoffe, Verfahren und Verwendung eines Bindemittels zu ihrer Herstellung**
Layered product, method and use of an adhesive for the manufacturing of such a product
Produit laminé, méthode de fabrication et utilisation d'une colle pour la réalisation d'un tel produit

(30) Priorität: 06.09.1993 DE 4329890
(43) Veröffentlichungstag der Anmeldung: 08.03.1995
(73) Patentinhaber: Bakelite AG, 58642 Iserlohn-Letmathe (DE); Akzo Nobel Faser AG, 42103 Wuppertal (DE)
(72) Erfinder: Böttcher, Axel, Dr., D-46487 Wesel (DE); Stieber, Ulrich, D-45475 Mülheim (DE); Mohr, Michael, D-42113 Wuppertal (DE); Fels, Achim, Dr., D-42109 Wuppertal (DE)

(56) Entgegenhaltungen:
- WO-A-89/01124
- AU-A- 2 985 867
- DE-A- 3 928 408
- FR-A- 2 398 607
- GB-A- 811 634
- US-A- 3 000 772
- US-A- 3 353 187
- DATABASE WPI Week 8516, Derwent Publications Ltd., London, GB; AN 85095048 & JP-A-60 032 858
- PATENT ABSTRACTS OF JAPAN vol. 14, no. 442 (C-1097) 16. August 1993 & JP-A-50 098 229
- DATABASE WPI Week 8237, Derwent Publications Ltd., London, GB; AN 8278737 & SU-78 642 553 (V. STARZHINSK ET AL) 12. Juli 1978
- DATABASE WPI Week 9029, Derwent Publications Ltd., London, GB; AN 90219842 & JP-A-2 147 635 (SUMITOMO BAKELITE) 6. Juni 1990
- DATABASE WPI Week 8411, Derwent Publications Ltd., London, GB; AN 84065095 & JP-A-59 020 327 (TOSHIBA CHEM)
- A.L. ALESI ET AL 'New matrials and construction for improved helmets' November 1975 , ARMY MATERIALS AND RESEARCH CENTER , WATERTOWN (MASSACHUSSETS) * Seite 3, letzter Absatz - Seite 5, Absatz 1 * Seite 9, Punkt C. Kevlar Helmet
- DATABASE WPI Week 8725, Derwent Publications Ltd., London, GB; AN 87174765 & JP-A-62 106 932 (SUMITOMO BAKELITE) 18. Mai 1987

## Beschreibung

Die Erfindung betrifft Verbundwerkstoffe aus Geweben von Hochmodulfasermaterialien, wie z. B. Aramidfäden und die Verwendung von Bindemitteln zur Herstellung von Verbundwerkstoffen aus Geweben von Hochmodulfasermaterialien, die sich insbesondere als geschoßhemmende Laminate für die Herstellung von Schutzhelmen und ähnlichen Panzerungen gegen Geschosse eignen. Die Erfindung betrifft ebenfals ein Verfahren zur Herstellung solcher Verbundwerkstoffe.

Für militärische Zwecke werden derartige Laminate hergestellt unter Verwendung eines Bindemittels aus etwa 50 % Phenolharz und 50 % Polyvinylbutyral, wie dies z.B. auch aus US-A 3 353 187 (nächtsliegenden Stand der Technik für die Gegenstände des Ansprüche 1, 2 und 4) und AU-A 29858/67 bekannt ist. Die einzelnen Gewebe werden mit diesem Bindemittel imprägniert und die so erhaltenen Prepregs miteinander in der Wärme verpreßt, wobei das Bindemittel gehärtet wird und dem Verbundwerkstoff die notwendige Festigkeit bei gleichzeitiger erwünschter Elastizität verleiht.

Gemäß EP-B 0 169 432 werden Laminate mit besonders gutem Rückhaltevermögen gegenüber Geschossen erhalten, wenn der textile Charakter der einzelnen Gewebelagen erhalten bleibt und das die Gewebe verbindende Bindemittel als lediglich die Außenschicht der Gewebefäden benetzende Bindemittelschicht vorliegt. Dadurch wird beim Geschoßaufprall eine besonders gut dämpfende Wirkung erreicht.

Als bevorzugte Bindemittel werden Thermoplaste, insbesondere Acrylharze angesehen, weil diese sich gut auf die Oberfläche von Geweben aufbringen lassen ohne sie zu imprägnieren. Die Festigkeit und Elastizität der erhaltenen Laminate sind jedoch für Schutzhelme nicht ausreichend.

Es ist daher Aufgabe der Erfindung, Verbundwerkstoffe aus Geweben von Hochmodulfasermaterialien bereitzustellen, die einerseits die Festigkeit und Elastizität der bisherigen militärischen Schutzhelme besitzen, die andererseits aber ohne Erhöhung der Schichtdicke, d. h., ohne Gewichtserhöhung eine verbesserte den Geschoßaufprall dämpfende Wirkung zeigen.

Die Lösung der Aufgabe erfolgt durch Verbundwerkstoffe gemäß Anspruch 1, durch Verfahren zu ihrer Herstellung gemäß der Ansprüche 2 und 3 sowie durch die Verwendung der entsprechenden Bindemittel gemäß der Ansprüche 4 und 5.

Es wurde gefunden, daß eine ausreichende Festigkeit eines mit einem Bindemittel auf Basis Phenolharz/Polyvinylbutyral gefertigten Verbundwerkstoff aus Geweben von Hochmodulfasermaterialien auch dann noch gegeben ist, wenn das Bindemittel lediglich 4 bis 20 Gew.-% Resol enthält. Andererseits kann ein Bindemittel, das 4 bis 20 Gew.-% Resol, 75 bis 95 Gew.-% Polyvinylbutyral und 1 bis 5 Gew.-% Härtungsmittel enthält, als dünne Schicht auf ein Gewebe aufgetragen werden, ohne dieses zu imprägnieren. Dieses Bindemittel kann sogar in Form einer Folie hergestellt werden. Damit eröffnen sich Möglichkeiten für Herstellungsverfahren der Verbundwerkstoffe, die mit Imprägnierharzmischungen mit hohem Phenolharzgehalt nicht möglich sind. Die Verbundwerkstoffe und die damit gefertigten Schutzhelme, die durch Verpressen von mit dem erfindungsgemäßen Bindemittel beschichteten Gewebe oder durch Verpressen einander abwechselnder Lagen von Gewebe und Bindemittelfolie hergestellt werden, zeigen ausreichende Festigkeit und Elastizität und verbesserte, den Geschoßaufprall dämpfende Wirkung.

Es sind dies Verbundwerkstoffe aus Geweben von Hochmodulfasermaterialien oder ggf. zum Teil aus anderen synthetischen Fäden und einem Bindemittel, wobei die Bindemittelschicht im wesentlichen nur auf den Außenflächen der Gewebefäden angeordnet ist und das Bindemittel ein mit Polyvinylbutyral modifiziertes Resol ist.

Die eingesetzten Gewebe sind an sich bekannt, ebenso wie die Bindemittel und die Hochmodulfasermaterialien. Die bevorzugte Faser ist die Aramidfaser. Andere Hochmodulfasermaterialien sind Kohlenstoff-, Bornitrid-, Siliciumcarbid- oder Wolframfasern, die zur Verstärkung von Aramidfasern mit in die Gewebe eingewebt sein können. Aus Kostengründen können aber auch andere Fasermaterialien, wie etwa Polyethylen-, Polyvinylalkohol-, Polyacrylnitril-, Polyester- oder Polyamidfasern im Gewebe eingearbeitet sein. Bevorzugt werden Gewebe einer Fasersorte mit Geweben anderer Fasersorten miteinander kombiniert.

Der Begriff Gewebe im Sinne der vorliegenden Erfindung umfaßt alle textilen Flächengebilde, wie beispielsweise Webwaren, Maschinenwaren wie Gestricke oder Gewirke, Gelege, Vliese und andere.

Resole sind in alkalischem Medium hergestellte Phenol- oder Kresol-Formaldehyd-Kondensationsprodukte, ausgehend von einem molaren Verhältnis Phenol(Kresol) : Formaldehyd von 1 : 1 bis 1 : 3, insbesondere von 1 : 2 bis 1 : 3. Bevorzugt eingesetzt werden niedermolekulare Resoltypen (1 bis 4 Kerne), wobei die neutralisierten, wasserfreien Harze meist in einem niedrigen Alkohol gelöst sind und als Lösung mit einer entsprechenden Lösung eines Polyvinylbutyrals vermischt werden. Als Polyvinylbutyral können alle handelsüblichen Typen eingesetzt werden. Bevorzugt werden solche mit einem Butyral-Gehalt von 75 bis 80 % und einem OH-Gehalt von 18 bis 21 %. Auch diese Polymere sind bevorzugt in Alkohol gelöst.

Es ist allerdings auch möglich, trockenes und lösemittelfreies Resol, Polyvinylbutyral und ein Härtungsmittel miteinander zu homogenisieren, extrudieren und zu kalandrieren.

Die Harzlösungen werden miteinander vermischt, mit einem Härtungsmittel (Säureanhydrid, wie z. B. Phthal-, Hexahydrophthal-, Pyromellit- oder Fumarsäureanhydrid) versetzt und auf eine Trennfolie gegossen. Nach dem Abdampfen des Lösemittels wird die erhaltene Bindemittelschicht entweder auf ein Gewebe aufgebracht oder die Bindemittelschicht wird als eigenständige Folie (30 bis 60 g/m²) hergestellt, durch kurzzeitiges (etwa 1 Minute) Erwärmen auf etwa 80 bis 90 °C vorvernetzt und dadurch klebfrei gemacht, danach in diesem Zustand gelagert und bei Bedarf als solche eingesetzt.

Dementsprechend gibt es zwei unterschiedliche Verfahren zur Herstellung der erfindungsgemäßen Verbundwerkstoffe.
a. Es werden mit dem Bindemittel beschichtete Gewebe hergestellt und ggf. durch kurzzeitiges Erwärmen (1 Minute) auf etwa 80 bis 90 °C vorvernetzt, um klebfreie Produkte zu erhalten, die lagerfähig sind. Zur Herstellung der Verbundwerkstoffe werden je nach gewünschter Dicke, bzw. Schutzwirkung mehrere ( 10 bis 25) Lagen der ein- oder beidseitig beschichteten Gewebe übereinander gelegt und gemäß dem Stand der Technik unter Formgebung bei 140 bis 180 °C innerhalb von 30 bis 90 Minuten miteinander verpreßt, wobei der Preßdruck im Bereich von 3 bis 10 bar liegt. Dabei werden die Gewebeschichten miteinander verklebt und das Bindemittel härtet aus, ohne in das Gewebe einzudringen.
b. Entsprechend der gewünschten Dicke des Verbundwerkstoffes werden mehrere unbeschichtete Gewebelagen übereinander geschichtet, wobei jeweils zwischen den Geweben eine Folie aus Bindemittel gelegt wird. Die Gesamtheit dieser Lagen wird dann unter an sich gleichen Bedingungen wie bei a. miteinander verpreßt.

### BEISPIELE

### Beispiel 1

Die Standardharzzusammensetzung entsprechend US-Spezifikation LP/P DES 12-78 B (50 % Phenolharz, 50 % Polyvinylbutyral) wird appliziert durch Beschichtung auf einem Twarongewebe der Fa. Akzo (Style T 750) (460 g/m²) bei einem Harzauftrag von 13 %. Aus diesem beschichteten Material wird ein
a) 12lagiges Laminat (6,28 kg/m²)
b) 13lagiges Laminat
hergestellt. Die Beschußergebnisse werden in der Tabelle 1 mit dem erfindungsgemäßen Bindemittel

| | |
|---|---|
| 75 % | Polyvinylbutyral |
| 20 % | Resolharz |
| 5 % | Phthalsäureanhydrid |

verglichen. Mit dem erfindungsgemäßen Harz wurde ebenfalls Twarongewebe T 750 beschichtet und daraus ein 12lagiges Laminat hergestellt. Die Laminatherstellung erfolgte jeweils durch Verpressung bei 160 °C innerhalb von 30 min.

**Tabelle 1 :**

| Laminat | V₅₀-Wert (m/s) |
|---|---|
| Standardharz 12lagig | 525 |
| Standardharz 13lagig | 539 |
| erfindungsgemäßes Harz 12lagig | 545 |
| Der V₅₀-Wert wurde nach Stanag 2920 mit 17 grain Splitter ermittelt. | |

### Beispiel 2

Die Standardharzzusammensetzung entsprechend US-Spezifikation LP/P DES 12-78 B wird appliziert durch Beschichtung auf einem Twarongewebe "hochfest" der Fa. Akzo (Style CT 736) (410 g/m²) bei einem Harzauftrag von 13 %. Aus diesem beschichteten Material wird ein 12lagiges Laminat (5.526 kg/m²) hergestellt.

Mit dem erfindungsgemäßen Bindemittel gemäß Beispiel 1 wird ebenfalls Twarongewebe CT 736 beschichtet und daraus ein 12lagiges Laminat hergestellt. Die Laminatherstellung erfolgt jeweils durch Verpressung bei 160 °C innerhalb von 30 min. In Tabelle 2 ist der V₅₀-Wert nach Stanag 2920 mit 17 grain Splitter verglichen.

**Tabelle 2 :**

| Laminat | V₅₀-Wert (m/s) |
|---|---|
| Standardharz 12lagig | 519 |
| erfindungsgemäßes Harz 12lagig | 541 |

### Beispiel 3

Die Laminatherstellung erfolgt wie in Beispiel 1. Es werden jedoch mit dem Standardharz ein 10lagiges Laminat und mit dem erfindungsgemäßen Harz ein 9lagiges Laminat hergestellt und der Kugelbeschuß 9 mm Para nach SK I (Deutsche Polizeinorm) verglichen. Beide Laminate zeigen gleiche Beschußfestigkeit, unterscheiden sich jedoch stark in ihrem Gewicht.
Standardharz:
   10lagiges Laminat T 750 -------> 5,23 kg/m²
Erfindungsgemäßes Harz:
   9lagiges Laminat T 750 -------> 4,71 kg/m²

## Patentansprüche

1. Verbundwerkstoffe aus Geweben von Hochmodulfasermaterialien oder ggf. zum Teil aus anderen synthetischen Fasermaterialien und einem Bindemittel, wobei die Bindemittelschichten im wesentlichen nur zwischen den Gewebelagen angeordnet sind und das Bindemittel ein mit Polyvinylbutyral modifiziertes Resol ist, **dadurch gekennzeichnet,** daß der Resolgehalt im Bereich von 4-20 Gew.-% und der Gehalt an Polyvinylbutyral im Bereich von 75-95 Gew.-% liegt.

2. Verfahren zur Herstellung der Verbundwerkstoffe gemäß Anspruch 1, **dadurch gekennzeichnet**, daß mehrere Lagen mit dem Bindemittel beschichteter Gewebe bei Temperaturen im Bereich von 140 bis 180 °C miteinander verpreßt werden.

3. Verfahren zur Herstellung der Verbundwerkstoffe gemäß Anspruche 1, **dadurch gekennzeichnet**, daß mehrere Lagen unbeschichteter Gewebe, zwischen denen jeweils eine Folie aus Bindemitteln vorhanden ist, bei Temperaturen im Bereich von 140 bis 180 °C miteinander verpreßt werden.

4. Verwendung eines Bindemittels aus 75-95 Gew.-% Polyvinylbutyral, 4-20 Gew.-% Resol und 1-5 Gew.-% Härtungsmittel zur Herstellung von Verbundwerkstoffen aus Geweben von Hochmodulfasern, die gegebenenfalls zum Teil andere synthetische Fasern enthalten können.

5. Verwendung eines Bindemittels nach Anspruch 4, **dadurch gekennzeichnet**, daß dieses in Form einer Folie vorliegt.

## Claims

1. Composite materials produced from fabrics of high-modulus fibre materials or optionally in part from other synthetic fibre materials and a binder, wherein the layers of binder are arranged essentially only between the layers of fabric, and the binder is a resol modified with polyvinyl butyral, **characterized in that** the resol content is in the range of from 4 to 20% by weight and the polyvinyl butyral content is in the range of from 75 to 95% by weight.

2. A process for producing the composite materials according to Claim 1, **characterized in that** a plurality of layers of fabrics coated with the binder are pressed together at temperatures in the range of from 140 to 180°C.

3. A process for producing the composite materials according to Claim 1, **characterized in that** a plurality of layers of uncoated fabrics, between which a foil of binders is provided in each case, are pressed together at temperatures in the range of from 140 to 180°C.

4. Use of a binder consisting of from 75 to 95% by weight of polyvinyl butyral, from 4 to 20% by weight of resol and from 1 to 5% by weight of hardening agent for producing composite materials from fabrics of high-modulus fibres which can optionally contain in part other synthetic fibres.

5. Use of a binder according to Claim 4, **characterized in that** it is in the form of a foil.

## Revendications

1. Produit composite ou stratifié à partir de tissus de fibres à haut module ou, le cas échéant, partiellement à partir d'autres fibres synthétiques et d'un liant, les couches médianes du liant n'étant essentiellement disposées qu'entre les couches du tissu et le liant est un résol modifié au polyvinylbutyral, caractérisé en ce que le teneur en résol se situant dans la plage de 4-20 % en poids et la teneur en polyvinylbutyral dans la plage de 75-95 % en poids.

2. Procédé pour la préparation d'un produit composite ou stratifié selon la revendication 1, caractérisé en ce que l'on comprime plusieurs couches avec le liant du tissu revêtu à des températures dans la plage de 140 à 180 °C.

3. Procédé pour la préparation d'un produit composite ou stratifié selon la revendication 1, caractérisé en ce que l'on comprime entre elles plusieurs couches de tissu non revêtu, entre lesquelles est chaque fois prévue une feuille de liant, à des températures dans la plage de 140 à 180°C.

4. Usage d'un liant qui contient 75-95 % en poids de polyvinylbutyral, 4-20% en poids de résol et 1-5 % en poids d'un durcisseur pour la préparation d'un produit composite ou stratifié à partir de tissus de fibres à haut module, qui peuvent contenir, le cas échéant, d'autre fibres synthétiques.

5. Usage d'un liant selon la revendication 4, caractérisé en ce qu'il se présente sous forme d'une feuille.
